# FASCICULE DE BREVET EUROPEEN

(11) **EP 1 501 272 B1**
(45) Date de publication et mention de la délivrance du brevet: **26.09.2012**
(21) Numéro de dépôt: 04015280.3
(22) Date de dépôt: 30.06.2004
(51) Int. Cl.: H04M 3/56

(54) **Procédé d'organisation de conférence**
Verfahren zum Organisieren einer Telefonkonferenz
Method of organising a conference call

(30) Priorité: 23.07.2003 EP 03291820
(43) Date de publication de la demande: 26.01.2005
(73) Titulaire: FRANCE TELECOM, 75015 Paris (FR)
(72) Inventeur: De Vaulchier du Deschaux, Alois, 91360 Villemoisson sur Orge (FR); Gallaire, Jean-Paul, 75016 Paris (FR)
(74) Mandataire: Moisand, Thomas Marie

(56) Documents cités:
- EP-A- 0 999 686
- EP-A- 1 098 504
- WO-A-01/52513
- US-B1- 6 366 575

## Description

La présente invention concerne l'organisation d'une conférence entre plusieurs personnes distantes, et plus précisément entre un organisateur de la conférence et plusieurs participants. Par exemple la conférence est une conférence téléphonique, dite également conférence multipoint, organisée entre plusieurs terminaux téléphoniques des participants par l'intermédiaire d'un équipement réservé, appelé pont de conférence.

Plus particulièrement, l'invention est dirigée vers la réservation préalable de la conférence dans un serveur de réservation de conférence afin de réserver les ressources nécessaires dans un pont de conférence qui seront disponibles à une date donnée de la conférence.

Actuellement, une conférence téléphonique, dite également réunion téléphonique ou téléréunion, est réservée par l'organisateur, soit de manière occasionnelle, soit par abonnement, en indiquant au serveur de réservation de conférence, directement ou par un opérateur, la date, l'heure, la durée et le nombre de participants à la conférence. En réponse, le serveur de réservation attribue un numéro de pont téléphonique à la conférence réservée qui est communiquée à l'organisateur de la conférence. Pour que les participants soient avertis de l'établissement de la conférence, l'organisateur de la conférence doit prévenir lui-même tous les participants en leur communiquant les coordonnées de la conférence, à savoir la date, l'heure et la durée ainsi que naturellement le thème qui sera abordé pendant la conférence, ainsi que le numéro de pont téléphonique. L'organisateur de la conférence doit par conséquent lui-même prévenir chacun des participants par exemple par téléphone ou par courrier électronique pour leur fournir les caractéristiques de la conférence.

Le document WO 01/52513 décrit un procédé pour coordonner des conférences téléphoniques.

Le document EP 0 999 686 décrit un procédé d'établissement d'une conférence téléphonique.

L'**objectif** principal de l'invention est de décharger l'organisateur de la conférence en automatisant la communication des caractéristiques de la conférence aux différents participants. Cette automatisation ne nécessite aucun téléchargement d'une quelconque application dans les terminaux des participants, ni l'inscription à un quelconque service, ni même une connexion à un service d'application particulier pour que chaque participant soit notifié des caractéristiques de la conférence.

Pour atteindre cet objectif, l'invention fournit un procédé pour organiser une conférence entre un organisateur et plusieurs participants ayant respectivement des terminaux reliés à un réseau de télécommunications, au moyen d'un serveur de réservation appelé depuis le terminal de l'organisateur pour réserver l'un de plusieurs moyens de gestion de conférence. Le procédé comprend les étapes suivantes :
- transmission des adresses de moyens de notification des participants depuis le terminal d'organisateur au serveur de réservation qui les mémorise,
- notification automatique de messages d'invitation par le serveur de réservation aux moyens de notification des participants désignés par les adresses mémorisées,
- sélection d'un moyen de gestion de conférence disponible pour la conférence par le serveur de réservation, et
- transmission de données de désignation du moyen de gestion de conférence (PCm) sélectionné aux terminaux des participants.

Par exemple si une personne, dite organisateur, souhaite aller le soir même au cinéma avec ses amis, dits participants, et décide de discuter avec eux du choix du film, l'invention lui donne la possibilité de réserver une conférence pour qu'il dialogue en direct avec tous ses amis. Grâce à la notification automatique des moyens de notification des amis, tels que des terminaux téléphoniques et/ou des messageries, les amis seront prévenus automatiquement de l'existence de cette conférence et recevront les messages d'invitation incluant les caractéristiques de la conférence nécessaires pour connecter leurs terminaux au moyen de gestion de conférence réservé, tel qu'un pont de conférence.

L'invention vise également à faciliter la connexion du terminal de chaque participant à l'un disponible des moyens de gestion de conférence sans que le participant saisisse une quelconque adresse ou numéro par exemple relatif au serveur de réservation ou à un moyen de gestion de conférence susceptible d'être disponible.

A cette fin, selon une première réalisation, chaque message d'invitation transmis par le serveur de réservation et reçu par un terminal comprend, outre les caractéristiques de la conférence, un lien pour connecter le terminal à l'un des moyens de gestion de conférence. Ce lien peut désigner explicitement ou non l'adresse d'un moyen de gestion de conférence déjà réservé ou à réserver ultérieurement par le serveur de réservation avant la conférence.

Par exemple, le lien est un hyperlien incluant une adresse masquée de redirection dans le serveur de réservation. Dans cet exemple, le participant d'un terminal sélectionne l'hyperlien qui pointe vers l'adresse de redirection masquée pour connecter le terminal au serveur de réservation et rediriger la connexion du terminal et du serveur de réservation vers le moyen de gestion de conférence disponible. Cette caractéristique de l'invention permet au serveur de réservation de décider lui-même la réservation d'un moyen de gestion de conférence, non pas immédiatement après la réception des adresses des terminaux des participants, mais bien après cette réception, afin d'optimiser l'occupation des ressources dans les moyens de gestion de conférence. En particulier, le serveur de réservation peut réserver un moyen de gestion de conférence disponible sensiblement avant l'heure de la conférence prévue par l'organisateur et transmise avec les adresses des moyens de notification des participants au serveur de réservation.

Selon un autre exemple, le lien est un hyperlien incluant une adresse du moyen de gestion de conférence disponible. Dans cet exemple, le participant d'un terminal sélectionne l'hyperlien qui pointe vers l'adresse du moyen de gestion de conférence disponible pour le connecter au terminal.

Selon une variante de la première réalisation, le moyen de gestion de conférence disponible est sélectionné par le serveur de réservation avant la notification de messages d'invitation afin que le serveur de réservation introduise l'adresse du moyen de gestion de conférence disponible dans les messages d'invitation.

Selon une deuxième réalisation, le moyen de réservation sélectionne un moyen de gestion de conférence disponible qui se signale lui-même auprès des participants. Le procédé comprend alors, après la sélection du moyen de gestion de conférence disponible, une transmission d'un message de commande de notification depuis le serveur de réservation au moyen de conférence réservé, une transmission de notifications comprenant un hyperlien incluant une adresse du moyen de gestion de conférence disponible aux terminaux des participants, et une sélection de l'hyperlien qui pointe vers ladite adresse dans chaque terminal pour le connecter au moyen de gestion de conférence disponible. Les notifications comprenant l'hyperlien peuvent être transmises aux moyens de notification par le serveur de gestion de conférence disponible sensiblement avant l'heure de la conférence prévue par l'organisateur et transmise avec les adresses des moyens de notification des participants au serveur de réservation.

Pour organiser la conférence, chaque message d'invitation peut inclure notamment des données d'horodatage, telles que date, heure et durée de la conférence, et ainsi que le thème de la conférence qui sont transmis avec les adresses des moyens de notification des participants par le terminal de l'organisateur au serveur de réservation afin que le serveur de réservation transmettent des messages d'invitation incluant les données d'horodatage et le thème de la conférence au moyen de notification.

Aucun matériel particulier n'est obligatoire au niveau de chaque participant. Un simple terminal téléphonique peut suffire. De préférence, le serveur de réservation s'adapte aux modes de lecture des moyens de notification des participants. Dans ce cas, le terminal d'organisateur transmet des indicateurs de modes de lecture des moyens de notification des participants en association respectivement avec les adresses de ceux-ci au serveur de réservation afin que les messages d'invitation transmis aux moyens de notification soient adaptés dans le serveur de réservation respectivement selon les modes de lecture des moyens de notification. Par exemple, un message d'invitation est un message vocal numérique pour un téléphone fixe classique ou un radiotéléphone mobile associé à une messagerie vocale, ou est un message textuel pour un terminal du type ordinateur personnel pouvant consulter une messagerie de courrier électronique ou une messagerie de télécopie ou pour un radiotéléphone mobile associé à une messagerie de messages courts.

L'invention concerne également un serveur de réservation de conférence pour organiser une conférence entre un organisateur et plusieurs participants ayant respectivement des terminaux reliés à un réseau de télécommunications. Le serveur comprend un moyen pour mémoriser des adresses de moyens de notification des participants transmises par le terminal d'organisateur après que celui-ci ait appelé le serveur de réservation pour réserver l'un de plusieurs moyens de gestion de conférence, et un moyen pour notifier automatiquement des messages d'invitation aux moyens de notification des participants désignés par les adresses mémorisées. Le serveur comprend en outre un moyen de sélection d'un moyen de gestion de conférence disponible pour la conférence et un moyen de transmission de données de désignation du moyen de gestion de conférence sélectionné aux terminaux des participants.

Le serveur de réservation peut également comprendre un adaptateur de message pour convertir une partie d'un message transmis par le terminal d'organisateur en des parties des messages d'invitation vers les moyens de notification des participants respectivement selon des indicateurs de mode de lecture des moyens de notification.

D'autres caractéristiques et avantages de la présente invention apparaîtront plus clairement à la lecture de la description suivante de plusieurs réalisations préférées de l'invention, à titre d'exemples non limitatifs, en référence aux dessins annexés correspondants dans lesquels :
- la figure 1 est un bloc-diagramme d'un réseau de télécommunications entre des terminaux de plusieurs participants à une conférence et un serveur de réservation de conférence pour mettre en oeuvre le procédé d'organisation de conférence selon l'invention ; et
- les figures 2 et 3 sont des algorithmes d'étapes du procédé d'organisation de conférence selon des première et deuxième réalisations de l'invention, respectivement.

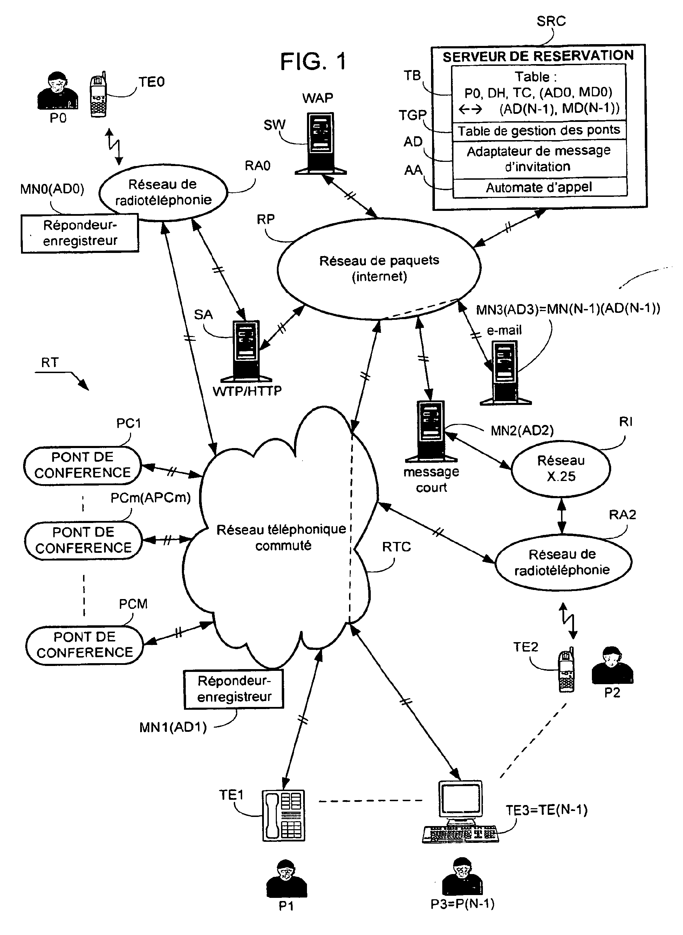

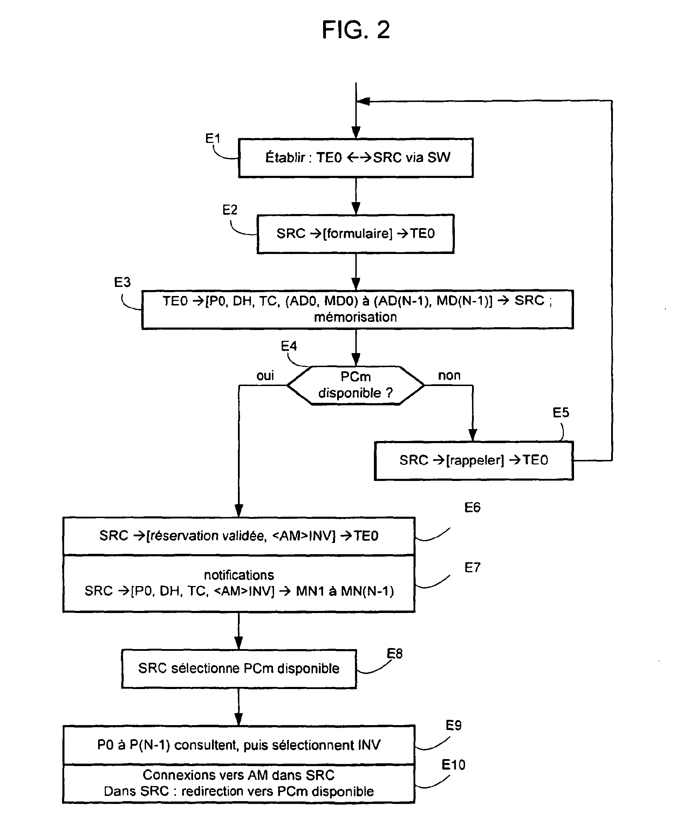

Pour la mise en oeuvre du procédé d'organisation de conférence selon la réalisation illustrée aux figures 1 et 2, il est supposé qu'une conférence est à organiser entre N=4 participants P0 à P3=P(N-1) qui ont chacun au moins un terminal respectif TE0 à TE3=TE(N-1). Tous les terminaux sont de type vocal de manière à établir une conférence vocale, dite également audioconférence. Cependant, en variante, tous les terminaux peuvent être du type vidéo pour établir une visioconférence, ou peuvent être du type textuel pour établir une conférence par échange de messages textuels.

Tous les terminaux TE1 à TE(N-1) sont reliés à un serveur de réservation de conférence SRC à travers un réseau de télécommunications RT comprenant au moins le réseau téléphonique commuté RTC et un réseau de paquets RP tel que l'internet.

Selon la réalisation illustrée, le terminal TE0 est celui de l'organisateur de conférence P0 qui réserve la conférence dans le serveur de réservation SRC. Le terminal TE0 est un terminal radiotéléphonique mobile relié au réseau téléphonique commuté RTC à travers un réseau de radiotéléphonie cellulaire numérique RA0, en tant que réseau d'accès. Le terminal TE0 est doté d'un navigateur et en particulier a accès à des applications implémentées dans un serveur d'information web SW qui sert de portail aux terminaux mobiles dans le réseau de radiotéléphonie cellulaire RA0. En pratique, le terminal TE0 a accès à des applications WAP (Wireless Application Protocol) à travers un serveur d'accès SA interconnecté entre le réseau de radiotéléphonie RA0 et l'internet RP. Le serveur SA joue le rôle d'une passerelle de conversion entre le protocole de transport WTP (Wireless Transfer Protocol) compatible avec des applications WAP et le protocole de transport HTTP (HyperText Transfer) applicable dans le serveur SW afin que le terminal TE0 et le serveur SW échangent des données au format WML (Wireless Markup Language). En variante, à la place du serveur d'accès SA, les communications pour les applications WAP entre le terminal TE0 et le serveur web SW sont réalisées à travers un réseau à commutation par paquets avec gestion de la mobilité et accès par voie radio GPRS (General Packet Radio Service).

Dans un menu d'application WAP offert par le serveur SW, l'organisateur P0 peut choisir sur son terminal TE0 une application de conférence selon l'invention afin que la réservation d'une conférence soit effectuée depuis le terminal TE0 dans le serveur de réservation SRC à travers le serveur SW.

Selon une variante plus concentrée, le serveur web SW héberge une application de réservation de conférence selon l'invention qui est illustrée matériellement d'une manière distincte dans le serveur SRC à la figure 1.

Le terminal d'organisateur TE0 peut recevoir des notifications de message vocal depuis un répondeur-enregistreur MN0, dit également messagerie vocale, qui lui est associé dans le réseau de radiotéléphonie RA0.

Le terminal TE1 du participant P1 est un terminal téléphonique fixe relié au réseau téléphonique commuté RTC par une ligne téléphonique classique. Le terminal TE1 est également associé à une messagerie vocale du type répondeur-enregistreur MN1 dans le réseau téléphonique RTC.

Le participant P2 possède un terminal radiotéléphonique TE2 relié au réseau téléphonique commuté RTC à travers un réseau de radiotéléphonie cellulaire numérique RA2 en tant que réseau d'accès. Pour notifier un message au participant P2, une messagerie de messages courts lui est attribuée dans un serveur de messages courts (Service Centre SC) MN2 relié d'une part à l'internet RP, et d'autre part au réseau de radiotéléphonie RA2 à travers un réseau d'accès intermédiaire RI comme par exemple un réseau de transmission de paquets de type X.25, un réseau numérique à intégration de services RNIS, ou un réseau ATM.

Le terminal TE3=TE(N-1) du participant P3 est un ordinateur personnel qui est relié au réseau téléphonique commuté RTC par une liaison fixe, par exemple une ligne ADSL (Asymmetric Digital Subscriber Line). Des messages destinés au participant P3 peuvent être déposés dans une messagerie de courrier électronique (e-mail) qui lui est attribuée dans un serveur de courrier électronique MN3 qui est reliée à l'internet RP.

Les messages déposés dans les messageries des serveurs MN2 et MN3 peuvent être hypertextuels, c'est-à-dire contenant des hyperliens.

Les répondeurs-enregistreurs MN0 et MN1, le serveur de messages courts MN2 et le serveur de courrier électronique MN3 sont attribués à titre d'exemple respectivement aux terminaux TE0 à TE3 des participants P0 à P3, et constituent des moyens de notification pour notifier des messages d'invitation à participer à une conférence, comme on le verra dans la suite.

Selon d'autres variantes, d'autres moyens de notification peuvent être attribués aux terminaux TE0 à TE3. Par exemple, le terminal TE3 est notifié par un serveur vocal ou une messagerie vocale de téléphone fixe du type répondeur-enregistreur à la place d'une messagerie de courrier électronique, le terminal TE2 est notifié par un répondeur-enregistreur du type messagerie vocale à la place d'une messagerie de messages courts, etc.

Dans une variante plus globale, l'un des terminaux TE0 à TE(N-1) est associé à une messagerie unifiée qui réunit plusieurs moyens de notification tels qu'un répondeur-enregistreur de message vocal relié au réseau téléphonique commuté RTC ou au réseau de radiotéléphonie associé au terminal, un récepteur de messages courts interconnecté entre l'internet RP et le réseau de radiotéléphonie associé, une messagerie de courrier électronique par exemple supportée par un serveur du type POP (Post Office Protocol), et un enregistreur de télécopie relié au réseau téléphonique commuté.

En général, un moyen de notification est consulté par le participant pour vérifier si un message y a été déposé, ou notifie le dépôt d'un message au terminal associé si le participant a refusé de recevoir directement le message depuis le terminal. Selon le type de moyen de notification, celui-ci peut répéter la notification tant que le terminal associé ne l'a pas enregistré ou reproduit pour une lecture ou écoute par le participant. Un moyen de notification peut être même confondu avec le terminal par rapport au réseau RT, c'est-à-dire le moyen de notification et le terminal offrent une adresse commune notamment au serveur SRC, comme c'est le cas lorsque le moyen de notification est un répondeur-enregistreur intégré dans le terminal téléphonique ou associé à la ligne téléphonique reliée à un terminal téléphonique.

De plus, un terminal donné, tel qu'un téléphone mobile TE2, un ordinateur TE3 ou un téléphone fixe moderne TE1 est doté d'une mémoire qui enregistre les derniers numéros téléphoniques et adresses des terminaux et serveurs appelants ayant appelé le terminal donné, selon une présentation du numéro/adresse de l'appelant du type CLIP (Calling Line Identification Présentation). Le participant du terminal donné peut sélectionner ultérieurement le numéro/l'adresse de l'un des terminaux et serveurs appelants pour établir une communication/connexion avec celui-ci.

Dans la suite de la description, une "adresse" AD1 à AD(N-1) d'un moyen de notification MN0 à MN(N-1) associé à un terminal est considérée comme un numéro téléphonique du terminal téléphonique tel que le terminal TE1 pour un répondeur-enregistreur MN1 ou tel qu'une messagerie de messages courts du terminal dans le serveur MN2, ou comme une adresse e-mail d'une messagerie de courrier électronique du terminal dans le serveur MN3.

Comme montré également à la figure 1, M ponts de conférence PC1 à PCM sont reliés au réseau téléphonique commuté RTC. Chaque pont de conférence PCm avec 1 ≤ m ≤ M est un contrôleur multipoint dédié à la gestion de plusieurs conférences téléphoniques et gérant en temps réel le déroulement de ces conférences comportant l'appel du pont par les participants de chaque conférence, le retrait d'un participant à l'initiative de l'organisateur ou du participant lui-même, des signalisations spécifiques pour l'organisateur d'une conférence, des identifications de locuteurs, une organisation de votes, une restriction de parole pour au moins un participant déterminé, etc. Un pont de conférence peut gérer simultanément plusieurs dizaines de conférences ayant chacune plusieurs participants et ainsi donner accès à plusieurs centaines de communications téléphoniques avec des terminaux de participant. Au sens de l'invention, un moyen de gestion de conférence comprend tout ou partie des ressources d'un pont pour organiser au moins une conférence téléphonique.

En pratique, les ponts de conférence sont répartis dans un territoire donné, tel qu'un pays. En variante, au moins l'un des ponts de conférence PC1 à PCM est relié au serveur de réservation de conférence SRC à travers une liaison spécialisée.

Le serveur de réservation SRC présente des fonctions connues d'un serveur de site web afin d'être appelé par l'organisateur P0 d'une conférence et lui adresser un formulaire pour établir la conférence, et comprend un automate d'établissement de communication AA pour appeler les moyens de notification MN0 à MN(N-1) des participants de la conférence à organiser. En particulier, la mémoire du serveur SRC inclut une table TB pour associer les coordonnées des participants à chaque conférence, et en particulier pour associer les coordonnées de l'organisateur P0, telles que son nom, éventuellement son prénom et l'adresse AD0 du moyen de notification MN0 de l'organisateur ainsi qu'éventuellement l'adresse du terminal TE0 ou de tout autre terminal de l'organisateur, aux adresses AD1 à AD(N-1) des moyens de notification des autres participants P1 à P(N-1).

Chaque adresse AD0 à AD(N-1) d'un moyen de notification est de préférence associée à un indicateur MD0 à MD(N-1) spécifiant le mode de lecture de message dans le moyen de notification lorsque le serveur SRC accepte différents modes de lecture des moyens de notification. Par exemple, les modes de lecture sont un mode vocal pour des messages vocaux dans les répondeurs-enregistreurs MN0 et MN1, un mode textuel pour des messages textuels dans les moyens de notification MN2 et MN3, et un mode vidéo pour des messages d'image ou audiovisuels pour le moyen de notification MN3. Le serveur SRC comprend alors un adaptateur de message AD qui convertit au moins une partie d'un message transmis par le terminal d'organisateur TE0 en des messages d'invitation vers les moyens de notification MN0 à MN(N-1)) des participants P0 à P(N-1) respectivement selon les indicateurs de mode de lecture MD0 à MD(N-1) des moyens de notification MN0 à MN(N-1).

Par exemple, si le terminal TE0 de l'organisateur PO transmet un message incluant des données d'horodatage DH indiquant la date, l'heure et la durée de la conférence et le thème TC de la conférence sous la forme d'un texte dans un formulaire, l'adaptateur de message AD dans le serveur SRC est alors analogue à un serveur vocal et convertit par synthèse de parole les données textuelles DH et TC en une partie d'un message vocal numérisé. Les répondeurs-enregistreurs MN0 et MN1 pourront reproduire le message vocal pour être écouté, après notification de la réception du message vocal aux participants respectifs P0 et P1.

L'organisation préalable d'une conférence entre les participants P0 à PE3=PE(N-1) initiée par l'organisateur P0 depuis son terminal TE0 comprend essentiellement des étapes E1 à E10, comme montré à la figure 2.

Pour réserver une conférence, l'organisateur P0 appelle depuis son terminal radiotéléphonique TE0 le serveur SW à travers le réseau de radiotéléphonie RA0, le serveur d'accès SA et l'internet RP. Puis l'organisateur P0 sélectionne dans le menu des applications présenté par le serveur SW et affiché dans le terminal TE0 l'application de conférence téléphonique de manière à établir une communication WAP entre le terminal téléphonique TE0 et le serveur de réservation SRC qui a été appelé par le serveur SW, à l'étape E1 . Dans les étapes suivantes E2 à E9, les échanges de messages entre le terminal TE0 et le serveur de réservation SRC passent par le serveur SW.

A l'étape suivante E2, le serveur de réservation SRC transmet au terminal TE0 un formulaire qui est reçu en langage WML pour demander à l'organisateur P0 d'indiquer les caractéristiques de la conférence qu'il souhaite organiser. Les caractéristiques de la conférence sont notamment le nom et le prénom P0 de l'organisateur, l'adresse AD0 et l'indicateur de mode de lecture MD0 du moyen de notification MN0 par lequel l'organisateur souhaite être éventuellement notifié de la réservation d'un pont de conférence disponible sélectionné ultérieurement par le serveur SRC, des données d'horodatage DH telles que la date, l'heure et la durée de la conférence à organiser, le thème TC exprimé en quelques mots de la conférence comme par exemple le "choix d'un film pour demain soir", et des couples d'adresse et d'indicateur de mode de lecture (AD1, MD1) à (AD(N-1), MD(N-1)) des moyens de notification MN1 à MN(N-1) des N-1=3 participants P1 à P3=P(N-1) par lesquels ces participants souhaitent être notifiés des caractéristiques de la conférence. Ainsi à l'étape E3, le terminal TE0 transmet les caractéristiques de la conférence à organiser, c'est-à-dire au moins les adresses AD0 à AD(N-1) des moyens de notification des participants qui peuvent être saisies directement au clavier ou bien dans un répertoire d'adresses, au serveur de réservation SRC dont la table de mémoire précitée TB les mémorise.

A l'étape E4, un moyen répartiteur de charge de pont inclus dans le serveur de réservation SRC recherche dans des tables de gestion TGP utiles à la gestion des ponts de conférence si un créneau horaire ayant au moins la durée prévue pour la conférence à la date et à l'heure indiquées selon les données d'horodatage est disponible.

Si aucun pont de conférence n'est disponible selon les données d'horodatage DH transmises par le terminal d'organisateur TE0, le serveur SRC transmet un message au terminal TE0 invitant l'organisateur P0 à rappeler ultérieurement le serveur SRC, à l'étape E5. En pratique, le serveur SRC peut accepter des réservations de conférence sur une liste d'attente interne représentatives de 10% à 30% environ de l'ensemble des ressources des ponts de conférence lorsque cet ensemble est déjà entièrement réservé, compte-tenu de désistements ultérieurs par des organisateurs. Une réservation de pont de conférence inscrite dans la liste d'attente sera considérée ci-après comme une réservation de pont de conférence disponible.

Si l'un PCm des ponts de conférence PC1 à PCM est susceptible d'être disponible en correspondance avec les données d'horodatage DH à l'étape E4, le serveur de réservation SRC transmet un message d'acquittement au terminal TE0 afin de confirmer à l'organisateur P0 que la réservation est validée à l'étape E6. Le message d'acquittement ne contient aucune adresse de pont de conférence sélectionné, mais inclut une invitation INV à "rejoindre la conférence" spécifique à l'invention et décrite plus loin. Lorsque la conférence n'est pas à organiser immédiatement, une réservation d'un pont de conférence déterminé à l'avance entraînerait l'immobilisation inutile de ressource dans un pont de conférence. Après cette phase de réservation, le serveur SRC conserve en mémoire les caractéristiques de la conférence à organiser.

A l'étape suivante E7, l'automate d'appel AA appelle ensuite automatiquement les moyens de notification MN1 à MN(N-1) des autres participants P1 à P(N-1), dont certains peuvent être appelés avec les terminaux associés, pour leur transmettre un message d'invitation à participer à la conférence. Le message d'invitation est enregistré dans les moyens de notification et comprend, outre les données d'horodatage DH, le nom P0 de l'organisateur de la conférence et le thème TC qui doit être discuté au cours de la conférence, ainsi que l'invitation INV à "rejoindre la conférence" spécifique à l'invitation.

Le message d'invitation à participer à la conférence transmis par l'automate d'appel AA à un moyen de notification MN1 à MN(N-1) à l'étape E7 est au préalable adapté au mode de lecture du moyen de notification selon l'indicateur MD1 à MD(N-1) dans l'adaptateur de message AD. Le message transmis au répondeur-enregistreur MN1 est un message vocal synthétisé par l'adaptateur de message AD dans le serveur SRC ; le message transmis à la messagerie de messages courts dans le serveur MN2 est un message court formaté par l'adaptateur AD dans le serveur SRC ; le message transmis à la messagerie de courrier électronique dans le serveur MN3 est un message de courrier électronique formaté par l'adaptateur AD dans le serveur SRC.

Si le participant P1 est présent lors de la réception du message d'invitation à participer à la conférence, celui-ci décroche le combiné de son terminal TE1 de manière à écouter le message ; sinon le message est enregistré dans le répondeur-enregistreur MN1 qui de préférence lui notifie le dépôt de ce message par exemple lors du prochain décrochage du combiné du terminal TE1. S'agissant du participant P2, le dépôt du message d'invitation à participer à une conférence dans le serveur MN2 est notifié par un message court immédiatement au terminal radiotéléphonique TE2 si celui-ci n'est pas hors couverture afin que le participant P2 consulte le message court prochainement. Le message d'invitation à participer à une conférence transmis au serveur de courrier électronique MN3 est mémorisé par celui-ci et sera consulté par le participant P3 depuis son ordinateur personnel TE3 à la prochaine consultation de sa messagerie de courrier électronique dans le serveur MN3.

L'invitation "rejoindre la conférence" INV spécifique à l'invention et incluse dans chaque message d'invitation à participer contient un hyperlien externe qui pointe vers une adresse prédéterminée AM de préférence masquée qui est liée à un pont de conférence à réserver par le serveur SRC, comme cela sera précisé plus loin. Le masquage de l'adresse AM par rapport au contenu affiché ou écouté dans chaque terminal de participant évite que le participant du terminal mémorise une adresse pour participer à une conférence. Lorsque le moyen de notification d'un terminal de participant, tel qu'une messagerie dans le serveur MN2 ou MN3, reçoit des messages textuels, le message d'invitation est une petite page hypertextuelle par exemple en langage WML (Wireless Markup Language) ou HTML (HyperText Markup Language). Dans le contenu affiché de cette petite page, le texte "rejoindre la conférence" est mis en relief dans une zone active de pointeur d'un lien hypertextuel vers l'adresse masquée AM. Par exemple, dans le message d'invitation, l'invitation INV est présentée à la suite du thème TH de la conférence proposée et peut être : "si vous souhaitez participer à la conférence, consultez ce message et cliquez sur "rejoindre la conférence" aux date et heure de la conférence". De même, lorsque le moyen de notification est du type vocal, comme les répondeurs-enregistreurs MN0 et MN1, le message d'invitation est une petite page vocale écrite par exemple en langage VXML (Voice extensible Markup Language) et incluant l'invitation vocale : "si vous souhaitez participer à la conférence, consultez ce message et dites "rejoindre la conférence" aux date et heure de la conférence", dans laquelle la zone active vocale "rejoindre la conférence" est pointée vers l'adresse masquée AM.

Selon une première réalisation montrée à la figure 2, l'adresse masquée AM incluse dans le message d'invitation à participer et vers laquelle l'hyperlien textuel ou vocal pointe, est une adresse de redirection du type URL (Universal Resource Locator). Cette adresse de redirection désigne un chemin prédéterminé qui est établi par le répartiteur de charge de pont dans le serveur de réservation SRC et qui sert à rediriger ultérieurement la connexion, y compris par voix IP (Internet Protocol), entre le terminal du participant et le serveur SRC vers un pont de conférence PCm disponible.

A l'étape E8, le répartiteur de charge dans le serveur SRC décide ainsi de lui-même en fonction de différentes tâches qu'il doit exécuter du moment, avant l'heure prévue par l'organisateur pour la conférence, de sélectionner des ressources disponibles dans l'un PCm des ponts de conférence, sans communiquer l'adresse de ce pont explicitement à l'organisateur et aux participants aux étapes précédentes E6 et E7. Par exemple, lorsque la conférence est prévue dans quelques jours, le répartiteur de charge dans le serveur SRC peut sélectionner des ressources disponibles dans un pont de conférence à des heures creuses de trafic, par exemple la nuit ou quelques minutes sensiblement avant l'heure prévue pour la conférence. La sélection différée de ressources dans un pont de conférence permet au répartiteur de charge de mieux optimiser l'occupation par des conférences répartie dans les ponts de conférence PC1 à PCM en évitant d'immobiliser des ressources plus que nécessaires dans ceux-ci et ainsi de mieux gérer la liste d'attente.

Si l'un des participants demande une connexion avec le serveur SRC avant l'heure de la conférence, le serveur SRC refuse de le renseigner.

Comme indiqué à l'étape E9, à la date et l'heure indiquées par les données d'horodatage DH contenues dans le message notifié d'invitation à participer, chaque participant P0 à P(N-1) consulte le message d'invitation enregistré dans son moyen de notification MN0 à MN(N-1) et sélectionne la zone active INV, soit en prononçant, soit en cliquant sur "rejoindre la conférence".

A l'étape E10, la sélection de la zone active dans l'invitation INV en prononçant "rejoindre la conférence" dans le terminal TE0, TE1 et la validation, en tant que numéro d'appelé, de l'adresse AM de l'appelant ayant transmis le message d'invitation dans le moyen de notification MN0, MN1, déclenche l'appel du serveur de réservation SRC à une entrée de celui-ci désignée par le numéro AM qui est un numéro du type sélection directe à l'arrivée réservé provisoirement à la conférence à organiser. En réponse à cet appel, le serveur SRC aboute la connexion avec le terminal TE0, TE1 à une connexion avec le pont de conférence sélectionné PCm.

A l'étape E10, lorsque l'usager du terminal TE2, TE3 clique sur la zone active dans l'invitation INV, le terminal TE2, TE3 du participant demande l'établissement automatique d'une connexion du terminal vers le chemin désigné par l'adresse masquée AM dans le serveur de réservation SRC. Ce chemin redirige la connexion vers l'adresse APCm du pont de conférence réservé PCm.

Les participants P0 à P(N-1) entrent ainsi dans la conférence, leurs terminaux étant connectés au pont de conférence disponible sélectionné PCm.

Selon une première variante de la première réalisation, l'adresse masquée AM incluse dans le message d'invitation est l'adresse APCm d'un pont de conférence PCm que le serveur de réservation SRC a sélectionné comme disponible à l'heure de la conférence, en réponse aux caractéristiques de la conférence qui étaient transmises par le terminal TE0 de l'organisateur à l'étape E3. Dans cette variante, l'étape E8 est ainsi comprise entre les étapes E4 et E6. A l'étape E9, la sélection de la zone active INV dans le message d'invitation à participer consulté par chaque participant conduit à un établissement d'une connexion du terminal TE0 à TE(N-1) du participant au pont de conférence réservé PCm.

Selon une deuxième variante plus simple, le serveur de réservation SRC sélectionne à l'étape E8 qui précède les étapes E6 et E7, des ressources dans un pont de conférence disponible PCm et introduit l'adresse APCm du pont disponible PCm dans les messages d'invitation notifiés aux terminaux aux étapes E6 et E7. L'adresse APCm qui remplace l'adresse masquée AM est lue par chacun des participants P0 à P(N-1) et sert à l'heure de la conférence à appeler directement le pont de conférence disponible PCm pour le connecter au terminal TE0 à TE(N-1) du participant à la place des étapes E9 et E10.

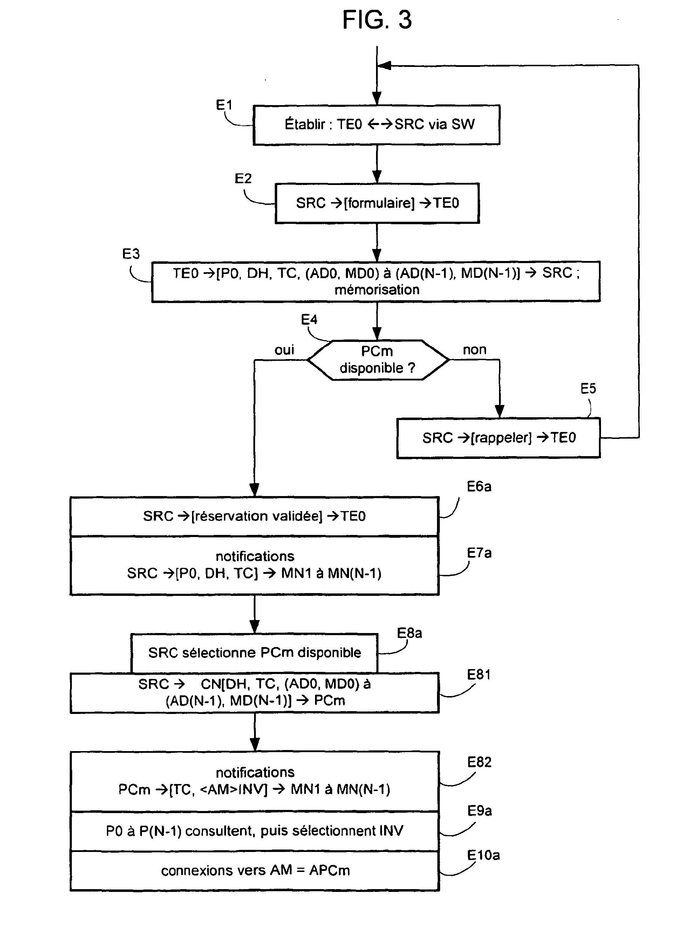

Selon une deuxième réalisation montrée à la figure 3, l'invitation INV avec l'hyperlien dans les messages d'invitation à participer aux étapes E6 et E7 est remplacée par une information de notification ultérieure de conférence sans hyperlien du type :"Vous serez notifié ultérieurement quelques minutes avant la conférence de votre participation à la conférence", à des étapes E6a et E7a.

Après que le répartiteur de charge de pont ait sélectionné des ressources disponibles dans l'un PCm des ponts de conférence à l'étape E8a selon cette deuxième réalisation, le serveur SRC transmet un message de commande de notification CN incluant les caractéristiques DH, TC et (ADO, MDO) à (AD(N-1), MD(N-1)) au pont de conférence sélectionné PCm via l'internet RP, à une étape E81. En réponse au message CM, le pont PCm établit une deuxième notification contenant une invitation INV avec l'hyperlien "rejoindre la conférence" du type : "si vous souhaitez participer immédiatement à la conférence, cliquez-sur/dites "rejoindre la conférence"". L'hyperlien contient ainsi la zone active "rejoindre la conférence" qui pointe vers le numéro téléphonique APCm du pont de conférence réservé PCm, en tant qu'adresse masquée AM.

A une étape suivante E82 exécutée sensiblement à l'heure de la conférence selon les données d'horodatage DH, le pont de conférence réservé PCm transmet des deuxièmes notifications <AM=APCm> INV aux terminaux TE0 à TE(N-1) des participants en adaptant les deuxièmes notifications respectivement aux modes de lecture MD0 à MD(N-1) des moyens de notification MN0 à MN(N-1) des terminaux, comme pour les premières notifications aux étapes E6a et E7a. Cette adaptation est effectuée préalablement par le pont PCm qui comprend un adaptateur de message, ou bien l'adaptateur AD du serveur SRC établit et transmet préalablement les deuxièmes notifications au pont PCm. Puis les participants P0 à P(N-1) sélectionnent la zone active dans l'invitation INV dans les deuxièmes notifications reçues pour qu'ils participent à la conférence dans le pont PCm à l'étape E9a. A l'étape suivante E10a et d'une manière analogue à l'étape E10, la prononciation de la zone active dans les terminaux TE0 et TE1 et le rappel du dernier numéro d'appelant dans les moyens de notification MN0 et MN1, en tant que numéro AM = APCm, et le cliquage de la zone active dans les terminaux TE2 et TE3 déclenchent respectivement les établissements de connexions des terminaux TE0 à TE(N-1) au pont de conférence sélectionné PCm, via le réseau RTC.

## Revendications

1. Procédé pour organiser une conférence entre un organisateur (P0) et plusieurs participants (P1-P(N-1)) ayant respectivement des terminaux (TE0-TE(N-1)) reliés à un réseau de télécommunications (RT), au moyen d'un serveur de réservation (SRC) appelé depuis le terminal de l'organisateur pour réserver l'un de plusieurs moyens de gestion de conférence (PC1-PCM), comprenant les étapes suivantes :
- transmission (E3) des adresses (ADO-AD(N-1)) de moyens de notification (MN0-MN(N-1)) des participants depuis le terminal d'organisateur (TE0) au serveur de réservation (SRC) qui les mémorise,
- notification automatique (E6, E7) de messages d'invitation par le serveur de réservation aux moyens de notification des participants désignés par les adresses mémorisées (AD0-AD(N-1)),
**caractérisé en ce qu'**il comprend en outre les étapes de :
- sélection (E8) d'un moyen de gestion de conférence (PCm) disponible pour la conférence par le serveur de réservation (SRC) ; et
- transmission, par le serveur de réservation, de données de désignation du moyen de gestion de conférence (PCm) sélectionné aux terminaux des participants.

2. Procédé conforme à la revendication 1, selon lequel chaque message d'invitation transmis (E6, E7) par le serveur de réservation (SRC) et reçu par un terminal comprend un lien (INV) pour connecter le terminal à l'un des moyens de gestion de conférence.

3. Procédé conforme à la revendication 2, **caractérisé en ce que** le lien est un hyperlien (INV) incluant une adresse masquée de redirection (AM) dans le serveur de réservation (SRC), et **en ce qu'**il comprend (E9) dans chaque terminal (TE0-TE(N-1)) une sélection de l'hyperlien qui pointe vers l'adresse de redirection masquée (AM) pour connecter (E10) le terminal au serveur de réservation (SRC) et rediriger la connexion du terminal et du serveur de réservation vers le moyen de gestion de conférence disponible (PCm).

4. Procédé conforme à la revendication 2 ou 3, selon lequel la sélection (E8) du moyen de gestion de conférence disponible dans le serveur de réservation (SRC) est décidée sensiblement avant l'heure (DH) de la conférence prévue par l'organisateur (PO) et transmise (E3) avec les adresses (AD0-AD(N-1)) des moyens de notification des participants au serveur de réservation (SRC).

5. Procédé conforme à la revendication 2, **caractérisé en ce que** le lien est un hyperlien (INV) incluant une adresse (APCm) du moyen de gestion de conférence disponible (PCm) et **en ce qu'**il comprend dans chaque terminal (TE0-TE(N-1)) une sélection (E9) de l'hyperlien qui pointe vers l'adresse du moyen de gestion de conférence disponible pour le connecter (E10) au terminal.

6. Procédé conforme à la revendication 1, selon lequel le moyen de gestion de conférence disponible (PCm) est sélectionné par le serveur de réservation (SRC) avant la notification de messages d'invitation (E6, E7) afin que le serveur de réservation introduise l'adresse (APCm) du moyen de gestion de conférence disponible dans les messages d'invitation.

7. Procédé conforme à la revendication 1, comprenant après la sélection (E8a) du moyen de gestion de conférence disponible (PCm), une transmission (E81) d'un message de commande de notification (CN) depuis le serveur de réservation (SRC) au moyen de conférence réservé (PCm), une transmission de notifications (E82) comprenant un hyperlien (INV) incluant une adresse (APCm) du moyen de gestion de conférence disponible (PCm) aux terminaux (TE0-TE(N-1)) des participants, et une sélection (E9a) de l'hyperlien qui pointe vers ladite adresse (APCm) dans chaque terminal (TE0-TE(N-1)) pour le connecter au moyen de gestion de conférence disponible (PCm).

8. Procédé conforme à la revendication 7, selon lequel les notifications comprenant l'hyperlien (INV) sont transmises aux moyens de notification (MN0-MN(N-1)) par le serveur de gestion de conférence disponible (PCm) sensiblement avant l'heure (DH) de la conférence prévue par l'organisateur (P0) et transmise (E3) avec les adresses (AD0-AD(N-1)) des moyens de notification des participants au serveur de réservation (SRC).

9. Procédé conforme à l'une quelconque des revendications 1 à 8, selon lequel le terminal d'organisateur (TE0) transmet (E3) des données d'horodatage (DH) avec les adresses (AD0-AD(N-1)) des moyens de notification (MN0-MN(N-1)) au serveur de réservation (SRC) afin que les messages d'invitation transmis par celui-ci aux moyens de notification (MNO-MN(N-1) incluent les données d'horodatage.

10. Procédé conforme à l'une quelconque des revendications 1 à 9, selon lequel le terminal d'organisateur (TE0) transmet un thème de conférence (TC) avec les données d'horodatage (DH) au serveur de réservation (SRC) afin que les messages d'invitation transmis par celui-ci aux moyens de notification (MN0-MN(N-1)) incluent le thème de conférence.

11. Procédé conforme à l'une quelconque des revendications 1 à 10, selon lequel le terminal d'organisateur (TE0) transmet des indicateurs de modes de lecture (MDO-MD(N-1)) des moyens de notification (MN0-MN(N-1)) des participants (P0-PN) en association respectivement avec les adresses (ADO-AD(N-1)) des moyens de notification au serveur de réservation (SRC) afin que celui-ci adapte les messages d'invitation respectivement selon les indicateurs de mode de lecture des moyens de notification.

12. Procédé conforme à l'une quelconque des revendications 1 à 11, selon lequel un moyen de notification (MN0-MN(N-1)) est sélectionné parmi une messagerie vocale d'un téléphone fixe, une messagerie vocale d'un radiotéléphone mobile, une messagerie de courrier électronique, une messagerie de messages courts et une messagerie de télécopie.

13. Serveur de réservation de conférence (SRC) pour organiser une conférence entre un organisateur (P0) et plusieurs participants (P1-P(N-1)) ayant respectivement des terminaux (TEO-TE(N-1)) reliés à un réseau de télécommunications (RT), comprenant un moyen (TB) pour mémoriser des adresses (AD0-AD(N-1)) de moyens de notification (MN0-MN(N-1)) des participants (P0-P(N-1)) transmises (E3) par le terminal d'organisateur (TE0) après que celui-ci ait appelé le serveur de réservation pour réserver l'un de plusieurs moyens de gestion de conférence (PC1-PCM), et un moyen (AA) pour notifier automatiquement (E6, E7) des messages d'invitation aux moyens de notification des participants désignés par les adresses mémorisées, **caractérisé en ce qu'**il comprend en outre un moyen de sélection d'un moyen de gestion de conférence (PCm) disponible pour la conférence et un moyen de transmission de données de désignation du moyen de gestion de conférence sélectionné aux terminaux des participants.

14. Serveur conforme à la revendication 13, comprenant un adaptateur de message (AD) pour convertir (E3) une partie (P0, DH, TC) d'un message transmis par le terminal d'organisateur (TE0) en des parties des messages d'invitation vers les moyens de notification (MN0-MN(N-1)) des participants (P0-P(N-1)) respectivement selon des indicateurs de mode de lecture (MD0 à MD(N-1)) des moyens de notification (MN0 à MN(N-1)).

## Claims

1. Method of organizing a conference call between an organizer (P0) and a plurality of participants (P1-P(N-1)) having respective terminals (TEO-TE(N-1)) connected to a telecommunication network (RT), at least one reservation server (SRC) called from the terminal of the organizer to reserve one of a plurality of conference call management means (PC1-PCM), comprising the following steps:
- transmission (E3) of the addresses (AD0-AD(N-1)) of participant notification means (MN0-MN(N-1)) from the organizer terminal (TE0) to the reservation server (SRC), which stores them,
- automatic notification (E6, E7) of indication messages by the reservation server to the notification means of the participants designated by the stored addresses (AD0-AD(N-1)),
**characterized in that** it further comprises the steps of:
- selection (E8) of conference call management means (PCm) available for the conference call by the reservation server (SRC); and
- transmission by the reservation server of data designating the selected conference call management means (PCm) to the terminals of the participants.

2. Method according to Claim 1, **characterized in that** each invitation message (E6, E7) transmitted by the reservation server (SRC) and received by a terminal comprises a link (INV) for connecting the terminal to one of the conference call management means.

3. Method according to Claim 2, **characterized in that** the link (INV) is a hyperlink including a masked redirection address (AM) in the reservation server (SRC), and **in that** it comprises (E9) in each terminal (TE0-TE(N-1)) selection of the hyperlink that points to the masked redirection address (AM) for connecting (E10) the terminal to the reservation server (SRC) and redirecting the connection of the terminal and the reservation server to the available conference call management means (PCm).

4. Method according to Claim 2 or 3, wherein the selection (E8) of the conference call management means available in the reservation server (SRC) is decided on significantly before the time (DH) of the conference call scheduled by the organizer (P0) and transmitted (E3) with the addresses (AD0-AD(N-1)) of the participant notification means to the reservation server (SRC).

5. Method according to Claim 2, **characterized in that** the link (INV) is a hyperlink including an address (APCm) of the available conference call management means (PCm) and **in that** it comprises selection (E9) in each terminal (TE0-TE(N-1)) of the hyperlink that points to the address of the available conference call management means to connect it (E10) to the terminal.

6. Method according to Claim 1, wherein the available conference call management means (PCm) is selected by the reservation server (SRC) before the notification of invitation messages (E6, E7) in order for the reservation server to introduce the address (APCm) of the available conference call management means into the invitation messages.

7. Method according to Claim 1, comprising after the selection (E8a) of the available conference call management means (PCm), transmission (E81) of a notification control message (CN) from the reservation server (SRC) to the reserved conference call means (PCm), transmission (E82) of notifications comprising a hyperlink (INV) including an address (APCm) of the available conference call management means (PCm) to the terminals (TE0-TE(N-1)) of the participants, and selection (E9a) of the hyperlink that points to said address (APCm) in each terminal (TE0-TE(N-1)) to connect it to the available conference call management means (PCm).

8. Method according to Claim 7, wherein the notifications comprising the hyperlink (INV) are transmitted to the notification means (MNO-MN(N-1)) by the available conference call management means (PCm) significantly before the time (DH) of the conference call scheduled by the organizer (P0) and transmitted (E3) with the addresses (AD0-AD(N-1)) of the participant notification means to the reservation server (SRC).

9. Method according to any one of Claims 1 to 8, wherein the organizer terminal (TE0) transmits (E3) time and date data (DH) with the addresses (AD0-AD(N-1)) of the notification means (MNO-MN(N-1)) to the reservation server (SRC) in order for the invitation messages transmitted by the latter to the notification means (MN0-MN(N-1)) to include the time and date data.

10. Method according to any one of Claims 1 to 9, wherein the organizer terminal (TE0) transmits a conference call topic (TC) with the time and date data (DH) to the reservation server (SRC) in order for the invitation messages transmitted by the letter to the notification means (MN0-MN(N-1)) to include the conference call topic.

11. Method according to any one of Claims 1 to 10, wherein the organizer terminal (TE0) transmits reading mode indicators (MD0-MD(N-1)) of the notification means (MN0-MN(N-1)) of the participants (P0-PN) respectively in association with the addresses (AD0-AD(N-1)) of the notification means to the reservation server (SRC) in order for the latter to adapt the respective invitation messages according to the notification means reading mode indicators.

12. Method according to any one of Claims 1 to 11, wherein notification means (MN0-MN(N-1)) are selected from landline telephone voicemail, mobile telephone voicemail, electronic mail messaging, short message service messaging and facsimile messaging.

13. Conference call reservation server (SRC) for organizing a conference call between an organizer (P0) and a plurality of participants (P1-P(N-1)) having respective terminals (TE0-TE(N-1)) connected to a telecommunication network (RT), comprising means (TB) for storing addresses (AD0-AD(N-1)) of notification means (MN0-MN(N-1)) of the participants (P0-P(N-1)) transmitted (E3) by the organizer terminal (TE0) after the latter has called the reservation server to reserve one of a plurality of conference call management means (PC1-PCM), and means (AA) for automatic notification (E6, E7) of the invitation messages to the notification means of the participants designated by the stored addresses, **characterized in that** it further comprises means for selection of conference call management means (PCm) available for the conference call and means for transmission of data designating the selected conference call management means to the terminals of the participants.

14. Server according to Claim 13, comprising a message adapter (AD) for conversion (E3) of a portion (P0, DH, TC) of a message transmitted by the organizer terminal (TE0) into parts of invitation messages to the notification means (MN0-MN(N-1)) of the participants (P0-P(N-1)) respectively according to indicators (MD0 to MD(N-1)) of the reading mode for the notification means (MNO to MN(N-1)).

## Patentansprüche

1. Verfahren zum Organisieren einer Konferenz zwischen einem Organisator (P0) und mehreren Teilnehmern (P1-P(N-1)), die jeweils mit einem Telekommunikationsnetz (RT) verbundene Endgeräte (TE0-TE(N-1)) haben, mittels eines Reservierungsservers (SRC), der vom Endgerät des Organisators aus angerufen wird, um eine von mehreren Konferenzverwaltungseinrichtungen (PC1-PCM) zu reservieren, das die folgenden Schritte enthält:
- Übertragung (E3) der Adressen (AD0-AD(N-1)) von Mitteilungseinrichtungen (MN0-MN(N-1)) der Teilnehmer vom Organisator-Endgerät (TE0) zum Reservierungsserver (SRC), der sie speichert,
- automatische Mitteilung (E6, E7) von Einladungsnachrichten durch den Reservierungsserver an die Mitteilungseinrichtungen der Teilnehmer, die durch die gespeicherten Adressen (AD0-AD(N-1)) bezeichnet werden,
**dadurch gekennzeichnet, dass** es außerdem die folgenden Schritte enthält:
- Auswahl (E8) einer für die Konferenz verfügbaren Konferenzverwaltungseinrichtung (PCm) durch den Reservierungsserver (SRC); und
- Übertragung, durch den Reservierungsserver, von Bezeichnungsdaten der ausgewählten Konferenzverwaltungseinrichtung (PCm) an die Endgeräte der Teilnehmer.

2. Verfahren nach Anspruch 1, gemäß dem jede vom Reservierungsserver (SRC) übertragene und von einem Endgerät empfangene Einladungsnachricht (E6, E7) einen Link (INV) enthält, um das Endgerät mit einer der Konferenzverwaltungseinrichtungen zu verbinden.

3. Verfahren nach Anspruch 2, **dadurch gekennzeichnet, dass** der Link ein Hyperlink (INV) ist, der eine maskierte Weiterleitungsadresse (AM) im Reservierungsserver (SRC) enthält, und dass es in jedem Endgerät (TE0-TE(N-1)) eine Auswahl des Hyperlinks enthält (E9), der zur maskierten Weiterleitungsadresse (AM) zeigt, um das Endgerät mit dem Reservierungsserver (SRC) zu verbinden (E10) und die Verbindung des Endgeräts und des Reservierungsservers zur verfügbaren Konferenzverwaltungseinrichtung (PCm) weiterzuleiten.

4. Verfahren nach Anspruch 2 oder 3, gemäß dem die Auswahl (E8) der verfügbaren Konferenzverwaltungseinrichtung im Reservierungsserver (SRC) im Wesentlichen vor der Zeit (DH) der vom Organisator (P0) vorgesehenen Konferenz entschieden und mit den Adressen (AD0-AD(N-1)) der Mitteilungseinrichtungen der Teilnehmer an den Reservierungsserver (SRC) übertragen wird (E3).

5. Verfahren nach Anspruch 2, **dadurch gekennzeichnet, dass** der Link ein Hyperlink (INV), der eine Adresse (APCm) der verfügbaren Konferenzverwaltungseinrichtung (PCm) enthält, und dass es in jedem Endgerät (TE0-TE(N-1)) eine Auswahl (E9) des Hyperlinks enthält, der zur Adresse der verfügbaren Konferenzverwaltungseinrichtung zeigt, um sie mit dem Endgerät zu verbinden (E10).

6. Verfahren nach Anspruch 1, gemäß dem die verfügbare Konferenzverwaltungseinrichtung (PCm) von dem Reservierungsserver (SRC) vor der Mitteilung von Einladungsnachrichten (E6, E7) ausgewählt wird, damit der Reservierungsserver die Adresse (APCm) der verfügbaren Konferenzverwaltungseinrichtung in die Einladungsnachrichten einfügt.

7. Verfahren nach Anspruch 1, das nach der Auswahl (E8a) der verfügbaren Konferenzverwaltungseinrichtung (PCm) eine Übertragung (E81) einer Mitteilungssteuernachricht (CN) vom Reservierungsserver (SRC) zur reservierten Konferenzeinrichtung (PCm), eine Übertragung von Mitteilungen (E82), die einen Hyperlink (INV) enthalten, der eine Adresse (APCm) der verfügbaren Konferenzverwaltungseinrichtung (PCm) enthält, an die Endgeräte (TE0-TE(N-1)) der Teilnehmer, und eine Auswahl (E9a) des Hyperlinks enthält, der zur Adresse (APCm) in jedem Endgerät (TE0-TE(N-1)) zeigt, um es mit der verfügbaren Konferenzverwaltungseinrichtung (PCm) zu verbinden.

8. Verfahren nach Anspruch 7, gemäß dem die den Hyperlink (INV) enthaltenen Mitteilungen an die Mitteilungseinrichtungen (MN0-MN(N-1)) durch die verfügbare Konferenzverwaltungseinrichtung (PCm) im Wesentlichen vor der Zeit (DH) der Konferenz übertragen werden, die vom Organisator (P0) vorgesehen und mit den Adressen (AD0-AD(N-1)) der Mitteilungseinrichtungen der Teilnehmer an den Reservierungsserver (SRC) übertragen wird (E3).

9. Verfahren nach einem der Ansprüche 1 bis 8, gemäß dem das Organisator-Endgerät (TE0) Datum- und Uhrzeitangabedaten (DH) mit dem Adressen (AD0-AD(N-1)) der Mitteilungseinrichtungen (MN0-MN(N-1)) an den Reservierungsserver (SRC) überträgt (E3), damit die von diesem an die Mitteilungseinrichtungen (MN0-MN(N-1) übertragenen Einladungsnachrichten die Datum- und Uhrzeitangabedaten enthalten.

10. Verfahren nach einem der Ansprüche 1 bis 9, gemäß dem das Organisator-Endgerät (TE0) ein Konferenzthema (TC) mit den Datum- und Uhrzeitangabedaten (DH) an den Reservierungsserver (SRC) überträgt, damit die von diesem an die Mitteilungseinrichtungen (MN0-MN(N-1)) übertragenen Einladungsnachrichten das Konferenzthema enthalten.

11. Verfahren nach einem der Ansprüche 1 bis 10, gemäß dem das Organisator-Endgerät (TE0) Lesemodusanzeiger (MD0-MD(N-1)) der Mitteilungseinrichtungen (MN0-MN(N-1)) der Teilnehmer (P0-PN) zusammen jeweils mit den Adressen (AD0-AD(N-1)) der Mitteilungseinrichtungen an den Reservierungsserver (SRC) überträgt, damit dieser die Einladungsnachrichten je gemäß den Lesemodusanzeigern der Mitteilungseinrichtungen anpasst.

12. Verfahren nach einem der Ansprüche 1 bis 11, gemäß dem eine Mitteilungseinrichtung (MN0-MN(N-1)) aus einem Voicemail-Dienst eines Festnetztelefons, einem Voicemail-Dienst eines mobilen Funktelefons, einem E-Mail-Mitteilungsdienst, einem Kurznachrichten-Mitteilungsdienst und einem Telekopie-Mitteilungsdienst ausgewählt wird.

13. Konferenzreservierungsserver (SRC), um eine Konferenz zwischen einem Organisator (PO) und mehreren Teilnehmern (P1-P(N-1)) zu organisieren, die jeweils mit einem Telekommunikationsnetz (RT) verbundene Endgeräte (TE0-TE(N-1)) haben, der eine Einrichtung (TB) zum Speichern von Adressen (AD0-AD(N-1)) von Mitteilungseinrichtungen (MN0-MN(N-1)) der Teilnehmer (P0-P(N-1)), die vom Organisator-Endgerät (TEO) übertragen werden (E3), nachdem dieses den Reservierungsserver angerufen hat, um eine von mehreren Konferenzverwaltungseinrichtungen (PC1-PCM) zu reservieren, und eine Einrichtung (AA) zur automatischen Mitteilung (E6, E7) der Einladungsnachrichten an die Mitteilungseinrichtungen der Teilnehmer enthält, die von den gespeicherten Adressen bezeichnet werden, **dadurch gekennzeichnet, dass** er außerdem eine Einrichtung zur Auswahl einer für die Konferenz verfügbaren Konferenzverwaltungseinrichtung (PCm) und eine Einrichtung zur Übertragung von Bezeichnungsdaten der ausgewählten Konferenzverwaltungseinrichtung an die Endgeräte der Teilnehmer enthält.

14. Server nach Anspruch 13, der einen Nachrichtenadapter (AD) enthält, um einen Teil (P0, DH, TC) einer vom Organisator-Endgerät (TE0) übertragenen Nachricht in Teile der Einladungsnachrichten an die Mitteilungseinrichtungen (MN0-MN(N-1)) der Teilnehmer (P0-P(N-1)) jeweils gemäß Lesemodusanzeigern (MD0 bis MD(N-1)) der Mitteilungseinrichtungen (MN0 bis MN(N-1)) umzuwandeln (E3).
